(19) **Europäisches Patentamt / European Patent Office / Office européen des brevets**

(11) **EP 3 124 638 B1**

(12) **EUROPEAN PATENT SPECIFICATION**

(45) Date of publication and mention of the grant of the patent:
**17.06.2020 Bulletin 2020/25**

(21) Application number: **15769463.9**

(22) Date of filing: **23.03.2015**

(51) Int Cl.:
*C22C 38/00* (2006.01)     *C21D 8/06* (2006.01)
*C22C 38/54* (2006.01)     *C22C 38/02* (2006.01)
*C22C 38/04* (2006.01)     *C22C 38/06* (2006.01)
*C22C 38/42* (2006.01)     *C22C 38/44* (2006.01)
*C22C 38/46* (2006.01)     *C22C 38/48* (2006.01)
*C22C 38/50* (2006.01)     *C21D 1/60* (2006.01)
*C21D 9/00* (2006.01)      *C21D 1/18* (2006.01)
*C21D 7/06* (2006.01)

(86) International application number:
**PCT/JP2015/001642**

(87) International publication number:
**WO 2015/146141 (01.10.2015 Gazette 2015/39)**

(54) **STABILIZER STEEL HAVING HIGH STRENGTH AND EXCELLENT CORROSION RESISTANCE, VEHICLE STABILIZER EMPLOYING SAME, AND METHOD FOR MANUFACTURING SAME**

STABILISATORSTAHL MIT HOHER FESTIGKEIT UND HERVORRAGENDER KORROSIONSBESTÄNDIGKEIT, FAHRZEUGSTABILISATOR DAMIT UND VERFAHREN ZUR HERSTELLUNG DAVON

ACIER POUR STABILISATEUR AYANT UNE RÉSISTANCE ÉLEVÉE ET UNE EXCELLENTE RÉSISTANCE À LA CORROSION, STABILISATEUR DE VÉHICULE L'UTILISANT, ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2014 JP 2014060687**

(43) Date of publication of application:
**01.02.2017 Bulletin 2017/05**

(73) Proprietors:
• **NHK Spring Co., Ltd.**
  **Yokohama-shi, Kanagawa 236-0004 (JP)**
• **JFE Steel Corporation**
  **Tokyo, 100-0011 (JP)**

(72) Inventors:
• **FUKUOKA, Kazuaki**
  **Tokyo 105-0004 (JP)**
• **TOMITA, Kunikazu**
  **Tokyo 105-0004 (JP)**
• **TANGE, Akira**
  **Tokyo 105-0004 (JP)**
• **KURIMOTO, Kiyoshi**
  **Tokyo 105-0004 (JP)**
• **GOTO, Yurika**
  **Tokyo 105-0004 (JP)**

(74) Representative: **Lawrence, Richard Anthony**
**Keltie LLP**
**No.1 London Bridge**
**London SE1 9BA (GB)**

(56) References cited:
EP-A1- 2 708 612        WO-A1-2012/153831
WO-A1-2013/175821       JP-A- H11 124 623
JP-A- 2000 096 143      JP-A- 2001 164 338
JP-A- 2006 089 785      JP-A- 2007 131 871
JP-A- 2010 133 011

**EP 3 124 638 B1**

**Description**

TECHNICAL FIELD

The disclosure relates to a stabilizer steel material, a vehicle stabilizer, and a method for manufacturing a vehicle stabilizer.

BACKGROUND

A stabilizer is an important safety part in a suspension mechanism that reduces the roll of a vehicle during cornering and improves ride quality and driving stability. Since the stabilizer reduces vehicle body lean by spring action, steel as its raw material needs to have sufficient strength, toughness, and durability.

Hence, conventional stabilizers have been manufactured by, after cutting a hot rolled steel material of carbon steel such as S48C or spring steel such as SUP9 into predetermined dimensions, hot forging and bending the steel material, and further performing oil quenching-tempering to thermally refine the steel material to a predetermined strength. In recent years, however, demand has increased to omit heat treatment and improve productivity and efficiency, for cost reduction.

To meet this demand, JP H11-323495 A (PTL 1) describes a steel with a chemical composition in which Nb, Ti, and B are added to a steel of 0.13% to 0.35% C - 0.1% to 1.8% Si - 0.8% to 1.8% Cr, as non-heat-treated spring rolled wire steel or bar steel that, without undergoing high deformation or quenching-tempering after hot rolling, has a high strength of 120 kgf/mm² to 150 kgf/mm² as hot rolled, has excellent ductility and toughness and cold bending workability, and can be worked into a spring, a stabilizer, etc.

JP 2000-17390 A (PTL 2) describes a non-heat-treated high-strength steel material for a shock-absorbing/restoring mechanism member such as a stabilizer, which has a strength of 1150 MPa or more and good cold workability. To attain the desired strength in the non-heat-treated state as hot rolled, a steel with a composition in which V as a main element and other precipitation hardening elements are added in combination is hot rolled at low temperature and then cooled at an appropriate cooling rate.

WO 2011/111623 A1 (PTL 3) describes a stabilizer produced by cold forming and then quenching-tempering a steel obtained by adding Ti and B to a steel of 0.24% to 0.40% C - 0.15% to 0.40% Si - 0.50% to 1.20% Mn - 0.30% or less Cr.

JP 2012-237040 A (PTL 4) describes a stabilizer used as water quenched after cold forming or hot forming a steel obtained by adding Ti, Nb, and Al to a steel of 0.15% to 0.35% C - more than 0.60% and up to 1.5% Si - 1% to 3% Mn - 0.3% to 0.8% Cr with the range of Ti + Nb being limited.

JP 2007 131871 A (D1) describes a steel for induction hardening. The steel has a composition consisting of 0.35 to 0.65% C, ≤0.50% Si, 0.65 to 2.00% Mn, ≤0.015% P, 0.003 to 0.080% S, 0.05 to 0.50% Mo, ≤0.10% Al, ≤0.0070% N, ≤0.0020% O and the balance Fe with impurities and also has a structure in which martensite comprises ≥70% by area fraction. One or more kinds among elements in the following groups can be contained: (group 1) 0.0005 to 0.0050% B, ≤0.045% Ti and 3.4N to (3.4N+0.02)%; (group 2) one or more kinds among ≤0.20% Cu, ≤0.20% Ni, ≤0.20% Cr, ≤0.30% Nb and ≤0.20% V; (group 3) one or more kinds among ≤0.01% Ca, ≤0.30% Pb, ≤0.03% Bi and ≤0.10% Te.

EP 2708612 A1 (D2) describes a steel, designed for corrosion resistance and low-temperature toughness, for use as a vehicle suspension spring part. The steel comprises 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nb ≤ 0.07% by mass, and has a tensile strength of not less than 1,300 MPa.

CITATION LIST

Patent Literatures

PTL 1: JP H11-323495 A
PTL 2: JP 2000-17390 A
PTL 3: WO 2011/111623 A1
PTL 4: JP 2012-237040 A
D1: JP 2007 131871 A

D2: EP 2708612 A1

SUMMARY

(Technical Problem)

However, the techniques described in PTL 1 and PTL 2 have difficulty in reducing cost due to high alloy cost.
The technique described in PTL 3 can reduce cost, but is often problematic in terms of durability and especially in terms of sustainable corrosion resistance. The technique is thus unable to improve durability as desired.
The steel material described in PTL 4 does not have improved toughness as desired, and varies in durability.
In recent years, the industry has demanded not only cost reduction but also manufacturing processes with less burden on the global environment such as waste liquid disposal at manufacturing sites, from increasing awareness of global environment issues.
Particularly in the case of manufacturing stabilizers, quenching-tempering processes by oil quenching are needed after hot forming, depending on the chemical composition of the raw material. Disposal of waste oil used in such processes imposes burden on the global environment, and so processes avoiding the use of oil are desirable.
Another quenching method is water quenching. Water quenching, however, needs to be followed by reheating-tempering. This reheating-tempering requires high implementation cost, and so it is desirable to omit the reheating-tempering.
Moreover, it has become more difficult to reduce the vehicle weight than before, due to the installation of safety equipment, facilities for a comfortable atmosphere, and fuel cells associated with the attainment of safety and comfort and the alteration of vehicles into hybrid or electric vehicles. This has increased the need for suspension parts that ensure toughness in addition to higher strength. A stabilizer as an important safety part not only needs to have both high strength and high toughness, but also needs to cope with cold weathers, and therefore it is important to ensure low-temperature toughness as well as normal-temperature toughness.
It could be helpful to provide a highly durable stabilizer steel that has a tensile strength of 1200 MPa or more and excellent normal-temperature and low-temperature toughness and is used in an environmentally friendly manufacturing process at lower cost, a vehicle stabilizer employing, or using, the stabilizer steel, and a method for manufacturing the vehicle stabilizer.

(Solution to Problem)

As a result of conducting intensive study to solve the aforementioned problems, we discovered that the use of water as a quenching medium can enhance the stabilizer strength even with a material having lower quench hardenability, and high toughness as well as high strength can be attained by selecting a specific steel composition in view of this process.
In the case of using water quenching, the strength of the steel material is roughly determined by the C content, and a higher C content tends to cause lower toughness. We also conducted intensive study on this point, and discovered that, by reducing Si while adding B and by adding a minute amount of Mo in the steel composition, the toughness and therefore durability of the steel material are improved significantly while maintaining high strength.
We further studied the corrosion resistance required of stabilizers, and discovered that the inclusion of small amounts of Cu and Ni within a defined range further improves the corrosion resistance of the matrix. We also discovered that, during use of the steel material after coating, this corrosion resistance improvement effect also slows the development of corrosion pits from coating exfoliation sites.
This disclosure is based on the aforementioned discoveries and further studies.
In a first aspect, the invention provides a stabilizer steel consisting of, in mass%: C: 0.21% to 0.35%; Si: 0.60% or less but not including 0%; Mn: 0.30% to 1.50%; P: 0.035% or less; S: 0.035% or less; Cu: 0.05% to 0.35%; Ni: 0.03% to 0.15%; Cr: 0.05% to 0.80%; Mo: 0.003% to 0.050%; sol. Al: 0.005% to 0.080%; and B: 0.0005% to 0.0100%, and optionally, in mass%, one or more selected from Ca: 0.010% or less; Pb: 0.5% or less; Ti: 0.005% to 0.050%; V: 0.005% to 0.050%; and Nb: 0.005% to 0.050%,
with a balance being Fe and incidental impurities, wherein a sum of the Cu content and the Ni content is 0.15% or more, and a crystal grain size after water quenching is in a range of 7.5 to 10.5 in prior austenite crystal grain size number according to JIS G 0551, and the stabilizer steel has a tensile strength of 1200 MPa or more.
In a second aspect, the invention provides a method for manufacturing a stabilizer in vehicle stabilizer production, the method comprising: rolling the stabilizer steel according to claim 1 into a steel bar or a wire rod; after rolling the stabilizer steel, cold forming the steel bar or the wire rod into a shape of a stabilizer; and heating the formed stabilizer to a range of [an austenitizing temperature + 50 °C] or more and less than 1050 °C; or heating the steel bar or the wire rod to a range of [an austenitizing temperature + 50 °C] or more and less than 1050 °C, to form the steel bar or the wire rod into a shape of a stabilizer; or heating the steel bar or the wire rod to a range of [an austenitizing temperature + 50 °C] or more and 1250 °C or less, to form the steel bar or the wire rod into a shape of a stabilizer, air cooling the formed stabilizer to a normal temperature; reheating the cooled stabilizer to a range of [an austenitizing temperature + 50 °C] and less than 1050 °C; and then directly water quenching the stabilizer.

(Advantageous Effect)

With the disclosure, a stabilizer that has a tensile strength of 1200 MPa or more and excellent normal-temperature and low-temperature toughness is obtained by an environmentally friendly manufacturing process at lower cost, which is industrially very useful.

DETAILED DESCRIPTION

The following describes the reasons of the limitations in the disclosure. The % representation below is mass% unless stated otherwise.

C: 0.21% to 0.35%

C is an element necessary to ensure a predetermined strength of steel. To attain a tensile strength of 1200 MPa or more, the C content needs to be 0.21% or more. If the C content exceeds 0.35%, the carbide becomes excessive, and the corrosion resistance and the toughness both decrease too much. The upper limit is therefore 0.35%.
In the disclosure, by using a steel material low in carbon content as the stabilizer raw material, quench cracks expected to occur in water quenching using conventional stabilizer raw materials are prevented, and the toughness and corrosion resistance of the steel material are improved to realize a safer stabilizer.

Si: 0.60% or less (not including 0%)

Si is necessary for deoxidation during steelmaking, and effective in solid solution strengthening for the matrix and sag resistance enhancement as a spring. Accordingly, the addition of Si is essential. If the Si content exceeds 0.60%, however, the toughness degrades and so the durability degrades. The upper limit of the Si content is therefore 0.60%.

Mn: 0.30% to 1.50%

The Mn content needs to be 0.30% or more, to enhance the quench hardenability of the steel and ensure its strength. If the Mn content exceeds 1.50%, central segregation or microsegregation increases, causing the toughness of the steel to degrade. The upper limit of the Mn content is therefore 1.50%.

P: 0.035% or less

P is an impurity element which incidentally remains or enters in the process of steelmaking, and is segregated in the crystal grain boundary to cause toughness degradation. However, 0.035% or less P is allowable.

S: 0.035% or less

S is an impurity element which incidentally remains or enters in the process of steelmaking, and is segregated in the crystal grain boundary to cause toughness degradation, as with P. Besides, MnS as an inclusion becomes excessive, leading to decreases in both toughness and corrosion resistance. However, 0.035% or less S is allowable.

Cu: 0.05% to 0.35%

Cu is an element effective in improving the corrosion resistance. To achieve the effect, the Cu content needs to be 0.05% or more. If the Cu content exceeds 0.35%, the effect saturates, which is not economical. The upper limit of the Cu content is therefore 0.35%.

Ni: 0.03% to 0.15%

Ni is an element that improves the corrosion resistance, as with Cu. To achieve the effect, the Ni content needs to be 0.03% or more, in addition to the Cu content in the aforementioned range. If the Ni content exceeds 0.15%, the effect saturates, which is not economical (Ni is a scarce and expensive metal element produced in limited countries). The upper limit of the Ni content is therefore 0.15%.

Cr: 0.05% to 0.80%

Cr improves the quench hardenability and enhances the strength, but also affects the corrosion resistance. To ensure a tensile strength of 1200 MPa or more, the Cr content needs to be 0.05% or more. If the Cr content exceeds 0.80%, the Cr-containing carbide during tempering precipitates excessively and the corrosion resistance decreases significantly. The upper limit of the Cr content is therefore 0.80%.

Mo: 0.003% to 0.050%

Mo enhances the quench hardenability. At the same time, in the case of use as water quenched, the addition of at least a slight amount of Mo enhances the toughness. The effect is achieved when the Mo content is 0.003% or more. Since Mo is expensive, however, if the Mo content exceeds 0.050%, only the material cost increases, which is not economical. The Mo content is therefore 0.050% or less.

sol. Al: 0.005% to 0.080%

sol. Al is an abbreviation for solid solution aluminum, and indicates acid-soluble Al. sol. Al is an important element as a deoxidizer in steelmaking. To achieve the effect, the sol. Al content needs to be 0.005% or more. If the sol. Al content exceeds 0.080%, the oxide and the nitride become excessive, and not only the corrosion resistance but also the toughness decreases. The upper limit of the sol. Al content is therefore 0.080%.

B: 0.0005% to 0.0100%

B is an element that significantly contributes to the quench hardenability. B enhances the quench hardenability without decreasing the toughness, thus improving the strength. B also strengthens the crystal grain boundary after quenching, for improved durability. To achieve these effects, the B content needs to be 0.0005% or more. If the B content exceeds 0.0100%, these effects saturate, which is disadvantageous in terms of cost. The B content is therefore in the range of 0.0005% to 0.0100%.

Cu content + Ni content: 0.15% or more

In the disclosure, it is essential that the sum of the Cu content and the Ni content in the steel is 0.15% or more.
By setting the sum of the Cu content and the Ni content to 0.15% or more, the corrosion resistance of the matrix of the steel is further improved, so that the development of corrosion pits from coating exfoliation sites when using the steel after coating is slowed. The upper limit of the sum of the Cu content and the Ni content may be 0.50%, i.e. the sum of the respective upper limits of the Cu content and Ni content.
While the essential components in the steel have been described above, the steel material may further contain the following elements as appropriate as components that further improve the properties of the steel material industrially.

Ti: 0.005% to 0.050%

Ti forms a carbonitride in the steel, and is an element effective in strength improvement and crystal grain refinement. To achieve these effects, the Ti content needs to be 0.005% or more. If the Ti content exceeds 0.050%, the carbonitride becomes excessive, and the corrosion resistance and the toughness both decrease. The upper limit of the Ti content is therefore 0.050%. Accordingly, in the case of adding Ti, the Ti content is in the range of 0.005% to 0.050%.

V: 0.005% to 0.050%

V is present in the steel as a carbide or a nitride, and serves to enhance the strength of the material. To achieve the effect, the V content needs to be 0.005% or more. Since V is an expensive element, however, if the V content exceeds 0.050%, only the material cost increases. Accordingly, in the case of adding V, the V content is in the range of 0.005% to 0.050%.

Nb: 0.005% to 0.050%

Nb refines the structure and enhances the strength of the material, and also prevents toughness degradation. To achieve these effects, the Nb content needs to be 0.005% or more. If the Nb content exceeds 0.050%, the properties saturate and only the material cost increases. Accordingly, in the case of adding Nb, the Nb content is in the range of 0.005% to 0.050%.

Other additive elements

In addition to the aforementioned additive elements, other machinability improving elements such as Ca and Pb may be further added in minute amounts. By limiting the Ca content to 0.010% or less and the Pb content to 0.5% or less, the perforatability of the stabilizer ends can be further improved without particularly impairing the effects of the disclosure.

The balance in the steel material according to the disclosure is Fe and incidental impurities.

Prior austenite crystal grain size number of crystal grain size: 7.5 to 10.5

The desired tensile strength in the disclosure is high, i.e. 1200 MPa or more. To attain this strength level as quenched, the toughness needs to be ensured by refining the crystal grain size to a predetermined degree or more. On the other hand, if the crystal grain size is refined too much, the quench hardenability is insufficient, and the desired strength cannot be attained.

In view of this, in the disclosure, the crystal grain size of the steel material is limited to the range of 7.5 to 10.5 in prior austenite crystal grain size number. Preferably, the crystal grain size of the steel material is in the range of 8.5 to 10.5 in prior austenite crystal grain size number. The crystal grain size in the disclosure can be measured as prescribed in JIS G 0551.

In detail, a microscope observation image for each field of an optical microscope with 100 magnification is compared with the standard charts in JIS G 0551, to determine the crystal grain size number. 10 fields per sample are measured, and their average value is calculated as a measurement. In the standard charts, the smallest unit is the crystal grain size numbers in increments of 1. In the case where the crystal grains in a microscope field are intermediate between two standard charts, however, the expression 0.5 is used. For example, in the case where the crystal grains (observation image) in a microscope field are intermediate between the standard chart of grain size number 7 and the standard chart of grain size number 8, the crystal grain size number is determined as 7.5. The prior austenite crystal grain size mentioned here is the grain size of the austenite structure in quenching-heating.

In the disclosure, the stabilizer manufacturing conditions are not particularly limited except the quenching temperature. The stabilizer may be manufactured under conventional conditions using the stabilizer steel adjusted to the aforementioned preferable composition. In detail, the stabilizer may be manufactured under the conditions described below.

Rolling condition

Regarding steel bar rolling or wire rod rolling, rolling under a special condition is not required in the disclosure. The pre-rolling heating temperature is not particularly limited, and may be the same as a conventional wire rod or steel bar heating condition. In detail, the heating may be performed in the temperature range of 900 °C to 1250 °C. The finisher delivery temperature may be in the range of 900 °C to 1100 °C, i.e. the same as a conventional finisher delivery temperature for the wire rod or steel bar.

Forming into stabilizer shape

In the disclosure, the steel rolled into a steel bar or a wire rod as mentioned above is then cold formed into a stabilizer shape. The formation condition may be a conventional cold forming condition.

Heating condition after cold forming and before quenching

The method of heating after forming the stabilizer and before quenching is not particularly limited as long as the temperature condition described below is satisfied. The heating may be performed in a conventional quenching furnace under an inert gas atmosphere, to attain sufficient steel material toughness of 1200 MPa or more in tensile strength after quenching. For example, high frequency induction heating means or direct current heating means may be used. The high frequency induction heating means includes not only a high frequency induction heating furnace but also a high frequency induction heating coil device having coils for easily enclosing the heating object. The direct current heating means includes a direct current heater having both pole terminals for directly passing current through the heating object to cause resistance heating.

The heating means is preferably heating means of any of electrical heating, furnace heating, and high frequency induction heating, for productivity and the like.

Heating temperature before quenching: [austenitizing temperature + 50 °C] or more and less than 1050 °C

To optimize the prior austenite grain size which affects the quench hardenability, the lower limit of the heating temperature is [the austenitizing temperature (Ac$_3$) + 50 °C]. If the upper limit is too high, the crystal grains coarsen, which may have adverse effects such as the prior austenite crystal grain size number being not within the disclosed range or decarburization being insufficient. The upper limit of the heating temperature is therefore less than 1050 °C. The upper limit is preferably 1030 °C, and more preferably 1000 °C.

Quenching condition after heating

After the heating, water quenching is directly performed.

The water quenching in the disclosure may be performed using a conventional method. For example, a condition such as immersion quenching into a water tank or shower cooling is preferable.

Heating condition in hot bending forming

In the disclosure, forming into a stabilizer shape may be hot forming instead of cold forming.

The heating condition in this case may be the aforementioned heating condition after cold forming and before quenching.

Forming into stabilizer shape

The steel is then hot formed into a stabilizer shape. The condition here is conventionally known die forming using a specific die.

Quenching condition after heating

After the heating and forming, water quenching is directly performed. The aforementioned quenching condition (means) after heating may be used here.

Typically, it is economical to perform quenching immediately after hot forming as mentioned above. Due to time or location constraints, however, the stabilizer is once cooled to normal temperature after hot forming and then reheated and quenched in some cases.

The heating condition for hot forming in such a case may be the aforementioned heating condition for hot forming, but the allowable upper limit is about 1250 °C.

Reheating temperature: [austenitizing temperature + 50 °C] or more and less than 1050 °C

In the case of cooling the stabilizer once to normal temperature after hot forming and then reheating and quenching the stabilizer, the reheating is preferably performed with a lower limit of [the austenitizing temperature + 50 °C], and an upper limit of 1050 °C in consideration of adverse effects such as crystal grain coarsening and decarburization.

The heating means may be any of furnace heating, high frequency induction heating, and direct current heating, as with the heating condition for hot forming.

Quenching condition after reheating

After the reheating, water quenching is directly performed. The aforementioned quenching condition (means) after heating may be used here.

In the disclosure, the quenched stabilizer may be further subjected to one or more selected from a shot peening process, a shot blasting process, a coating process, and a baking process. The condition, facility, etc. used in each of the shot peening process, the shot blasting process, the coating process, and the baking process may comply with conventional methods.

EXAMPLES

(First Example)

The steels having the chemical compositions shown in Tables 1-1 and 1-2 were each obtained by steelmaking (150 kg) by test dissolution, made into a steel ingot, welded to form a billet measuring 160 mm per side, and hot rolled into a raw material of 20 mm in diameter. The rolled material was cut and subjected to a quenching process, and a tensile test, an impact test, an anti-corrosion test, and prior austenite crystal grain size determination were conducted. The balance in each of the steel compositions shown in Tables 1-1 and 1-2 was Fe and incidental impurities.

(1) The quenching process was performed as follows: Each steel material was heated for 30 minutes to the temperature obtained by adding 50 °C to the austenitizing temperature ($Ac_3$) calculated using the chemical composition of the steel and the following equation (rounded up to an integer), and then quenched. After this, each steel material except steel No. 22 was heated to 180 °C which is the temperature upper limit in the coating process, and then air cooled. Steel No. 22 was, after tempered with a temperature of 550 °C, heated to 180 °C and air cooled.

$$Ac_3 \ (^{\circ}C) = 908 - 2.237 \times \%C \times 100 + 0.4385 \times \%P \times 1000 + 0.3049 \times \%Si \times 100 - 0.3443 \times \%Mn \times 100 - 0.23 \times \%Ni \times 100 + 2 \times (\%C \times 100 - 54 + 0.06 \times \%Ni \times 100) \qquad \text{(From: Heat Treatment Technology, P81)}.$$

(2) The tensile test was performed using a JIS No. 4 test piece.
(3) The impact test was performed using a JIS No. 3 piece (U notch depth: 2 mm) at test temperatures of 20 °C and -40 °C.
The toughness evaluation in Table 2 was made based on the Charpy impact test results, where each sample whose absorbed energy measurement was less than 80 ($J/cm^2$) at 20 °C or less than 40 ($J/cm^2$) at -40 °C was determined as rejected, and each sample whose absorbed energy measurement was 80 ($J/cm^2$) or more at 20 °C and 40 ($J/cm^2$) or more at -40 °C was determined as accepted.
(4) The anti-corrosion test was performed as follows: A plate-like test piece of 20 mm in width, 50 mm in length, and 5 mm in thickness was collected from each round bar material heat-treated to a predetermined strength, and a corrosion test by repeated drying and wetting was carried out with the range of 15 mm in width and 40 mm in length in the plate-like test piece being set as a corrosion surface (while masking the other parts), to measure corrosion weight loss.
In the repeated drying and wetting, one cycle = "<5% NaCl, 35 °C> × 8 hours + <50% RH, 35 °C> × 16 hours" was performed for 10 cycles. The corrosion weight loss was calculated by measuring the weight before and after the corrosion test and dividing the weight difference by the corrosion area. Here, rust removal was made using a 20% ammonium hydrogen citrate aqueous solution of 80 °C.
In the anti-corrosion evaluation in Tables 2-1 and 2-2, each sample whose corrosion weight loss was 1000 ($g/m^2$) or more was determined as rejected, and each sample whose corrosion weight loss was less than 1000 ($g/m^2$) was determined as accepted.
(5) The prior austenite crystal grain size (grain size number) determination was performed as follows: According to JIS G 0551, the crystal grains were developed by quenching-tempering (Gh), and the determination was made by comparison with the standard charts.

Further, a torsional fatigue test in bar shape was conducted to evaluate the durability (fatigue strength) of the stabilizer raw material. In the torsional fatigue test, a bar of 20 mm in cross-sectional diameter was obtained by rolling the steel ingot of each composition, cut to a length of 220 mm, and subjected to electrical heating quenching and furnace heating tempering under the temperature conditions shown in Tables 2-1 and 2-2, thus producing a test piece. The part of 100 mm in length extending from the center toward both end faces of the test piece by 50 mm was put under the same repeated drying and wetting condition as the corrosion test, namely, one cycle = "<5% NaCl, 35 °C> × 8 hours + <50% RH, 35 °C> × 16 hours", for a total of 3 cycles. After this, a pulsating torsional fatigue test with one end fixed was conducted. The evaluation was made based on maximum stress after 100000 repetitions.

[Table 1-1]

Table 1-1

| | | | | | | | | | | | | | | | | mass% |
| Steel No. | C | Si | Mn | P | S | Cu | Ni | Cr | Mo | sol.Al | B | Ti | Nb | V | Cu+Ni | Category |
|---|---|---|---|---|---|---|---|---|---|---|---|---|---|---|---|---|
| 1 | 0.19* | 0.23 | 0.78 | 0.021 | 0.032 | 0.15 | 0.06 | 0.06 | 0.030 | 0.021 | 0.0032 | 0.025 | - | - | 0.21 | Comparative steel |
| 2 | 0.36* | 0.21 | 0.68 | 0.025 | 0.025 | 0.14 | 0.04 | 0.08 | 0.011 | 0.023 | 0.0031 | 0.024 | - | - | 0.18 | Comparative steel |
| 3 | 0.22 | 0.64* | 0.77 | 0.022 | 0.024 | 0.13 | 0.05 | 0.07 | 0.012 | 0.025 | 0.0033 | 0.021 | - | - | 0.18 | Comparative steel |
| 4 | 0.21 | 0.22 | 0.28* | 0.024 | 0.008 | 0.17 | 0.10 | 0.10 | 0.032 | 0.025 | 0.0025 | 0.022 | - | - | 0.27 | Comparative steel |
| 5 | 0.26 | 0.21 | 1.52* | 0.023 | 0.007 | 0.13 | 0.11 | 0.11 | 0.013 | 0.031 | 0.0021 | 0.028 | - | - | 0.24 | Comparative steel |
| 6 | 0.28 | 0.26 | 0.65 | 0.036* | 0.015 | 0.15 | 0.09 | 0.11 | 0.004 | 0.031 | 0.0015 | 0.022 | - | - | 0.24 | Comparative steel |
| 7 | 0.26 | 0.24 | 0.87 | 0.033 | 0.037* | 0.11 | 0.08 | 0.14 | 0.022 | 0.033 | 0.0015 | 0.024 | - | - | 0.19 | Comparative steel |
| 8 | 0.24 | 0.35 | 0.98 | 0.034 | 0.016 | 0.02* | 0.15 | 0.12 | 0.033 | 0.031 | 0.0016 | 0.031 | - | - | 0.17 | Comparative steel |
| 9 | 0.24 | 0.35 | 0.65 | 0.028 | 0.031 | 0.15 | 0.01* | 0.11 | 0.014 | 0.028 | 0.0018 | 0.033 | - | - | 0.16 | Comparative steel |
| 10 | 0.23 | 0.41 | 0.68 | 0.027 | 0.033 | 0.08 | 0.08 | 0.03* | 0.050 | 0.026 | 0.0016 | 0.038 | - | - | 0.16 | Comparative steel |
| 11 | 0.22 | 0.44 | 0.74 | 0.028 | 0.008 | 0.08 | 0.08 | 0.85* | 0.024 | 0.028 | 0.0018 | 0.022 | - | - | 0.16 | Comparative steel |
| 12 | 0.29 | 0.25 | 1.35 | 0.029 | 0.015 | 0.07 | 0.08 | 0.55 | 0.001* | 0.025 | 0.0020 | 0.025 | - | - | 0.15 | Comparative steel |
| 13 | 0.27 | 0.55 | 0.87 | 0.032 | 0.014 | 0.11 | 0.08 | 0.14 | 0.032 | 0.002* | 0.0025 | 0.028 | - | - | 0.19 | Comparative steel |
| 14 | 0.28 | 0.23 | 0.98 | 0.033 | 0.013 | 0.14 | 0.07 | 0.12 | 0.031 | 0.087* | 0.0025 | - | - | - | 0.21 | Comparative steel |
| 15 | 0.24 | 0.21 | 0.88 | 0.028 | 0.014 | 0.09 | 0.07 | 0.15 | 0.012 | 0.025 | 0.0003* | - | - | - | 0.16 | Comparative steel |
| 16 | 0.23 | 0.22 | 1.03 | 0.025 | 0.015 | 0.09 | 0.08 | 0.35 | 0* | 0.028 | 0* | 0.021 | 0.021 | - | 0.17 | Comparative steel |
| 17 | 0.25 | 0.21 | 0.54 | 0.027 | 0.014 | 0.12 | 0.08 | 0.14 | 0.004 | 0.031 | 0.0016 | 0.002* | - | - | 0.20 | Comparative steel |
| 18 | 0.27 | 0.26 | 0.87 | 0.021 | 0.013 | 0.33 | 0.06 | 0.11 | 0.021 | 0.033 | 0.0031 | 0.058* | - | - | 0.39 | Comparative steel |
| 19 | 0.22 | 0.27 | 1.01 | 0.022 | 0.027 | 0.32 | 0.07 | 0.33 | 0.008 | 0.033 | 0.0031 | 0.022 | 0.003* | - | 0.39 | Comparative steel |
| 20 | 0.23 | 0.27 | 0.77 | 0.024 | 0.023 | 0.31 | 0.07 | 0.11 | 0.009 | 0.032 | 0.0025 | 0.031 | - | 0.001* | 0.38 | Comparative steel |
| 21 | 0.23 | 0.27 | 0.89 | 0.024 | 0.023 | 0.08 | 0.04 | 0.11 | 0.005 | 0.032 | 0.0025 | 0.024 | - | - | 0.12* | Comparative steel |
| 22 | 0.57* | 0.18 | 0.83 | 0.015 | 0.018 | 0.13 | 0.02* | 0.82* | 0.004 | 0.025 | 0* | - | - | - | 0.15 | Comparative steel |
| 23 | 0.21 | 0.23 | 0.97 | 0.023 | 0.015 | 0.08 | 0.08 | 0.25 | 0.012 | 0.035 | 0.0021 | 0.022 | - | - | 0.16 | Disclosed steel |

EP 3 124 638 B1

(continued)

mass%

| Steel No. | C | Si | Mn | P | S | Cu | Ni | Cr | Mo | sol.Al | B | Ti | Nb | V | Cu+Ni | Category |
|---|---|---|---|---|---|---|---|---|---|---|---|---|---|---|---|---|
| 24 | 0.35 | 0.26 | 0.87 | 0.024 | 0.018 | 0.15 | 0.04 | 0.15 | 0.022 | 0.010 | 0.0025 | 0.028 | - | - | 0.19 | Disclosed steel |
| 25 | 0.22 | 0.60 | 0.86 | 0.024 | 0.021 | 0.13 | 0.04 | 0.21 | 0.014 | 0.011 | 0.0015 | 0.029 | - | - | 0.17 | Disclosed steel |
| 26 | 0.28 | 0.54 | 0.30 | 0.022 | 0.016 | 0.06 | 0.15 | 0.64 | 0.021 | 0.015 | 0.0010 | 0.024 | - | - | 0.21 | Disclosed steel |

*: Component not within disclosed range.

[Table 1-2 ]

Table 1-2

| | | | | | | | | | | | | | | | | mass% |
|---|---|---|---|---|---|---|---|---|---|---|---|---|---|---|---|---|
| Steel No. | C | Si | Mn | P | S | Cu | Ni | Cr | Mo | sol.Al | B | Ti | Nb | V | Cu+Ni | Category |
| 27 | 0.21 | 0.23 | 1.50 | 0.022 | 0.014 | 0.13 | 0.05 | 0.06 | 0.012 | 0.031 | 0.0010 | 0.031 | - | - | 0.18 | Disclosed steel |
| 28 | 0.27 | 0.53 | 0.77 | 0.035 | 0.014 | 0.15 | 0.06 | 0.18 | 0.031 | 0.078 | 0.0007 | - | - | - | 0.21 | Disclosed steel |
| 29 | 0.24 | 0.55 | 0.78 | 0.024 | 0.035 | 0.12 | 0.06 | 0.25 | 0.033 | 0.006 | 0.0007 | 0.035 | - | - | 0.18 | Disclosed steel |
| 30 | 0.25 | 0.42 | 0.81 | 0.033 | 0.027 | 0.05 | 0.10 | 0.25 | 0.011 | 0.008 | 0.0008 | 0.022 | - | - | 0.15 | Disclosed steel |
| 31 | 0.25 | 0.22 | 1.13 | 0.031 | 0.026 | 0.35 | 0.07 | 0.11 | 0.040 | 0.007 | 0.0012 | 0.023 | - | - | 0.42 | Disclosed steel |
| 32 | 0.26 | 0.21 | 1.12 | 0.031 | 0.024 | 0.13 | 0.03 | 0.15 | 0.020 | 0.006 | 0.0013 | 0.023 | - | - | 0.16 | Disclosed steel |
| 33 | 0.24 | 0.25 | 1.25 | 0.032 | 0.031 | 0.14 | 0.08 | 0.05 | 0.004 | 0.073 | 0.0021 | - | - | - | 0.22 | Disclosed steel |
| 34 | 0.21 | 0.08 | 0.54 | 0.028 | 0.024 | 0.21 | 0.08 | 0.80 | 0.031 | 0.065 | 0.0025 | - | - | - | 0.29 | Disclosed steel |
| 35 | 0.27 | 0.42 | 0.71 | 0.026 | 0.016 | 0.23 | 0.09 | 0.25 | 0.003 | 0.055 | 0.0023 | 0.015 | - | - | 0.32 | Disclosed steel |
| 36 | 0.26 | 0.53 | 0.67 | 0.025 | 0.015 | 0.25 | 0.09 | 0.22 | 0.038 | 0.005 | 0.0025 | 0.035 | - | - | 0.34 | Disclosed steel |
| 37 | 0.25 | 0.11 | 1.31 | 0.020 | 0.015 | 0.33 | 0.10 | 0.11 | 0.022 | 0.080 | 0.0010 | - | - | - | 0.43 | Disclosed steel |
| 38 | 0.22 | 0.55 | 1.08 | 0.018 | 0.014 | 0.31 | 0.11 | 0.15 | 0.008 | 0.072 | 0.0005 | - | - | - | 0.42 | Disclosed steel |
| 39 | 0.23 | 0.21 | 1.45 | 0.015 | 0.017 | 0.34 | 0.10 | 0.08 | 0.008 | 0.024 | 0.0007 | 0.005 | - | - | 0.44 | Disclosed steel |
| 40 | 0.26 | 0.25 | 1.25 | 0.015 | 0.017 | 0.31 | 0.12 | 0.11 | 0.011 | 0.021 | 0.0008 | 0.050 | - | - | 0.43 | Disclosed steel |
| 41 | 0.24 | 0.26 | 1.00 | 0.016 | 0.016 | 0.28 | 0.13 | 0.18 | 0.016 | 0.065 | 0.0009 | - | 0.005 | - | 0.41 | Disclosed steel |
| 42 | 0.25 | 0.25 | 0.87 | 0.021 | 0.014 | 0.15 | 0.12 | 0.30 | 0.017 | 0.043 | 0.0015 | 0.043 | - | 0.005 | 0.27 | Disclosed steel |
| 43 | 0.34 | 0.34 | 0.88 | 0.019 | 0.021 | 0.10 | 0.14 | 0.10 | 0.024 | 0.065 | 0.0014 | - | - | - | 0.24 | Disclosed steel |
| 44 | 0.24 | 0.31 | 0.95 | 0.017 | 0.025 | 0.11 | 0.14 | 0.16 | 0.031 | 0.066 | 0.0016 | - | 0.012 | - | 0.25 | Disclosed steel |
| 45 | 0.22 | 0.12 | 0.65 | 0.018 | 0.024 | 0.10 | 0.13 | 0.74 | 0.006 | 0.052 | 0.0020 | 0.044 | - | - | 0.23 | Disclosed steel |
| 46 | 0.23 | 0.21 | 0.94 | 0.021 | 0.023 | 0.15 | 0.14 | 0.31 | 0.013 | 0.045 | 0.0021 | 0.021 | - | 0.040 | 0.29 | Disclosed steel |
| 47 | 0.27 | 0.25 | 0.65 | 0.022 | 0.015 | 0.16 | 0.04 | 0.55 | 0.014 | 0.031 | 0.0025 | 0.021 | - | - | 0.20 | Disclosed steel |
| 48 | 0.23 | 0.53 | 0.93 | 0.021 | 0.021 | 0.15 | 0.04 | 0.23 | 0.004 | 0.033 | 0.0042 | 0.041 | 0.028 | 0.050 | 0.19 | Disclosed steel |
| 49 | 0.26 | 0.43 | 0.83 | 0.023 | 0.015 | 0.21 | 0.05 | 0.28 | 0.018 | 0.067 | 0.0035 | - | - | - | 0.26 | Disclosed steel |

(continued)

| Steel No. | C | Si | Mn | P | S | Cu | Ni | Cr | Mo | sol.Al | B | Ti | Nb | V | Cu+Ni | Category |
|---|---|---|---|---|---|---|---|---|---|---|---|---|---|---|---|---|
| 50 | 0.25 | 0.24 | 0.95 | 0.025 | 0.014 | 0.12 | 0.04 | 0.34 | 0.008 | 0.031 | 0.0021 | 0.025 | 0.024 | 0.030 | 0.16 | Disclosed steel |
| 51 | 0.24 | 0.25 | 0.86 | 0.034 | 0.016 | 0.22 | 0.05 | 0.33 | 0.013 | 0.054 | 0.0025 | 0.015 | - | - | 0.27 | Disclosed steel |

mass%

*: Component not within disclosed range.

[Table 2-1]

Table 2-1

| Test No. | Steel No. | $Ac_3$ (°C) | Quenching (°C) | T.S. (MPa) | EL. (%) | RA. (%) | $uE_{20}$ (J/cm$^2$) | $uE_{-40}$ (J/cm$^2$) | Toughness evaluation | Grain size number | Corrosion weight loss (g/m$^2$) | Anti-corrosion evaluation | Torsional fatigue (MPa) | Category |
|---|---|---|---|---|---|---|---|---|---|---|---|---|---|---|
| 1 | 1 | 844 | 900 | 758 | 15.9 | 75.1 | 105 | 61 | Accepted | 10.5 | 561 | Accepted | 550 | Comp. Ex. 1 |
| 2 | 2 | 845 | 900 | 1551 | 8.3 | 25.4 | 50 | 16 | Rejected | 10.5 | 1353 | Rejected | 540 | Comp. Ex. 2 |
| 3 | 3 | 857 | 920 | 1365 | 10.3 | 30.5 | 41 | 12 | Rejected | 10.5 | 555 | Accepted | 520 | Comp. Ex. 3 |
| 4 | 4 | 862 | 920 | 945 | 17.2 | 65.3 | 84 | 42 | Accepted | 10.5 | 531 | Accepted | 540 | Comp. Ex. 4 |
| 5 | 5 | 817 | 870 | 1640 | 6.4 | 23.5 | 55 | 28 | Rejected | 10.5 | 503 | Accepted | 530 | Comp. Ex. 5 |
| 6 | 6 | 854 | 910 | 1508 | 3.7 | 20.3 | 52 | 22 | Rejected | 10.5 | 605 | Accepted | 550 | Comp. Ex. 6 |
| 7 | 7 | 845 | 900 | 1501 | 8.8 | 24.0 | 46 | 16 | Rejected | 10.5 | 1503 | Rejected | 530 | Comp. Ex. 7 |
| 8 | 8 | 845 | 900 | 1456 | 15.0 | 65.7 | 73 | 45 | Rejected | 10.0 | 1524 | Rejected | 540 | Comp. Ex. 8 |
| 9 | 9 | 855 | 910 | 1320 | 13.3 | 67.2 | 84 | 44 | Accepted | 10.0 | 1241 | Rejected | 500 | Comp. Ex. 9 |
| 10 | 10 | 855 | 910 | 610 | 23.1 | 63.1 | 88 | 43 | Accepted | 10.0 | 556 | Accepted | 360 | Comp. Ex. 10 |
| 11 | 11 | 854 | 910 | 1522 | 6.4 | 22.1 | 64 | 38 | Rejected | 10.5 | 1256 | Rejected | 520 | Comp. Ex. 11 |
| 12 | 12 | 826 | 880 | 1652 | 4.8 | 22.5 | 67 | 34 | Rejected | 9.0 | 806 | Accepted | 540 | Comp. Ex 12 |
| 13 | 13 | 854 | 910 | 1521 | 9.6 | 36.5 | 36 | 14 | Rejected | 10.0 | 1300 | Rejected | 530 | Comp. Ex. 13 |

(continued)

| Test No. | Steel No. | Ac$_3$ (°C) | Quenching (°C) | T.S. (MPa) | EL. (%) | R.A. (%) | uE$_{20}$ (J/cm$^2$) | uE$_{-40}$ (J/cm$^2$) | Toughness evaluation | Grain size number | Corrosion weight loss (g/m$^2$) | Anti-corrosion evaluation | Torsional fatigue (MPa) | Category |
|---|---|---|---|---|---|---|---|---|---|---|---|---|---|---|
| 14 | 14 | 840 | 900 | 1425 | 9.3 | 35.2 | 41 | 12 | Rejected | 10.0 | 1235 | Rejected | 500 | Comp. Ex. 14 |
| 15 | 15 | 842 | 900 | 667 | 23.4 | 69.3 | 103 | 46 | Accepted | 10.0 | 608 | Accepted | 390 | Comp. Ex. 15 |
| 16 | 16 | 836 | 890 | 1236 | 6.4 | 23.5 | 46 | 9 | Rejected | 10.5 | 603 | Accepted | 460 | Comp. Ex. 16 |
| 17 | 17 | 853 | 910 | 1050 | 8.9 | 29.3 | 58 | 32 | Rejected | 7.5 | 510 | Accepted | 510 | Comp. Ex. 17 |
| 18 | 18 | 840 | 900 | 1511 | 8.9 | 29.8 | 44 | 15 | Rejected | 10.0 | 1300 | Rejected | 530 | Comp. Ex. 18 |
| 19 | 19 | 845 | 900 | 1153 | 9.3 | 31.0 | 56 | 12 | Rejected | 7.5 | 608 | Accepted | 570 | Comp. Ex. 19 |
| 20 | 20 | 846 | 900 | 1063 | 15.3 | 56.4 | 85 | 43 | Accepted | 11.0 | 641 | Accepted | 540 | Comp. Ex. 20 |
| 21 | 21 | 842 | 900 | 1333 | 18.7 | 53.3 | 108 | 43 | Accepted | 11.0 | 1344 | Rejected | 510 | Comp. Ex. 21 |
| 22 | 22 | 830 | 880 | 1256 | 9.9 | 36.4 | 64 | 32 | Rejected | 10.5 | 1318 | Rejected | 640 | Comp. Ex. 22 |
| 23 | 23 | 838 | 890 | 1294 | 22.6 | 68.5 | 128 | 79 | Accepted | 10.5 | 472 | Accepted | 710 | Ex. 1 |
| 24 | 24 | 840 | 890 | 1346 | 21.3 | 66.6 | 120 | 74 | Accepted | 10.5 | 461 | Accepted | 710 | Ex. 2 |
| 25 | 25 | 854 | 910 | 1345 | 21.3 | 66.7 | 120 | 74 | Accepted | 10.5 | 432 | Accepted | 720 | Ex. 3 |
| 26 | 26 | 867 | 920 | 1308 | 22.3 | 68.0 | 126 | 78 | Accepted | 10.0 | 478 | Accepted | 720 | Ex.4 |

[Table 2-2]

Table 2-2

| Test No. | Steel No. | Ac$_3$ (°C) | Quenching (°C) | T.S. (MPa) | EL. (%) | R.A. (%) | uE$_{20}$ (J/cm$^2$) | uE$_{-40}$ (J/cm$^2$) | Toughness evaluation | Grainsize number | Corrosion weight loss (g/m$^2$) | Anti-corrosion evaluation | Torsional fatigue (MPa) | Category |
|---|---|---|---|---|---|---|---|---|---|---|---|---|---|---|
| 27 | 27 | 819 | 870 | 1323 | 21.9 | 67.5 | 123 | 76 | Accepted | 10.5 | 426 | Accepted | 710 | Ex. 5 |
| 28 | 28 | 858 | 910 | 1346 | 21.3 | 66.7 | 120 | 74 | Accepted | 10.0 | 460 | Accepted | 710 | Ex. 6 |
| 29 | 29 | 854 | 910 | 1437 | 18.9 | 63.4 | 105 | 64 | Accepted | 10.0 | 497 | Accepted | 710 | Ex. 7 |
| 30 | 30 | 852 | 910 | 1362 | 20.9 | 66.1 | 117 | 72 | Accepted | 10.0 | 425 | Accepted | 730 | Ex. 8 |
| 31 | 31 | 835 | 890 | 1363 | 20.8 | 66.0 | 117 | 72 | Accepted | 10.5 | 449 | Accepted | 720 | Ex. 9 |
| 32 | 32 | 835 | 890 | 1375 | 20.5 | 65.6 | 115 | 71 | Accepted | 10.5 | 498 | Accepted | 720 | Ex. 10 |
| 33 | 33 | 832 | 890 | 1319 | 22.0 | 67.6 | 124 | 76 | Accepted | 10.5 | 427 | Accepted | 710 | Ex. 11 |
| 34 | 34 | 850 | 910 | 1458 | 18.4 | 62.6 | 102 | 62 | Accepted | 10.5 | 485 | Accepted | 720 | Ex. 12 |
| 35 | 35 | 852 | 910 | 1422 | 19.3 | 63.9 | 108 | 66 | Accepted | 10.5 | 461 | Accepted | 720 | Ex. 13 |
| 36 | 36 | 857 | 910 | 1319 | 22.0 | 67.6 | 124 | 77 | Accepted | 10.0 | 434 | Accepted | 710 | Ex. 14 |
| 37 | 37 | 820 | 870 | 1423 | 19.3 | 63.9 | 108 | 66 | Accepted | 10.0 | 454 | Accepted | 720 | Ex. 15 |
| 38 | 38 | 841 | 900 | 1458 | 18.4 | 62.6 | 102 | 62 | Accepted | 10.0 | 464 | Accepted | 730 | Ex. 16 |
| 39 | 39 | 817 | 870 | 1405 | 19.8 | 64.5 | 110 | 68 | Accepted | 10.5 | 455 | Accepted | 730 | Ex. 17 |
| 40 | 40 | 824 | 880 | 1435 | 19.0 | 63.5 | 106 | 65 | Accepted | 10.0 | 412 | Accepted | 720 | Ex. 18 |
| 41 | 41 | 833 | 890 | 1315 | 22.1 | 67.8 | 125 | 77 | Accepted | 10.5 | 425 | Accepted | 720 | Ex. 19 |
| 42 | 42 | 840 | 890 | 1420 | 19.4 | 64.0 | 108 | 66 | Accepted | 10.0 | 444 | Accepted | 710 | Ex. 20 |
| 43 | 43 | 839 | 890 | 1323 | 21.8 | 67.4 | 123 | 76 | Accepted | 10.5 | 462 | Accepted | 720 | Ex. 21 |
| 44 | 44 | 837 | 890 | 1331 | 21.7 | 67.2 | 122 | 75 | Accepted | 10.5 | 435 | Accepted | 720 | Ex. 22 |
| 45 | 45 | 843 | 900 | 1544 | 16.2 | 59.6 | 88 | 54 | Accepted | 10.5 | 429 | Accepted | 720 | Ex. 23 |
| 46 | 46 | 836 | 900 | 1444 | 18.8 | 63.1 | 104 | 64 | Accepted | 10.5 | 410 | Accepted | 710 | Ex. 24 |
| 47 | 47 | 848 | 900 | 1540 | 16.3 | 59.7 | 89 | 54 | Accepted | 10.5 | 419 | Accepted | 710 | Ex. 25 |
| 48 | 48 | 847 | 900 | 1414 | 19.5 | 64.2 | 109 | 67 | Accepted | 9.5 | 417 | Accepted | 710 | Ex. 26 |
| 49 | 49 | 848 | 900 | 1454 | 18.5 | 62.8 | 103 | 63 | Accepted | 9.5 | 423 | Accepted | 720 | Ex. 27 |

(continued)

| Test No. | Steel No. | Ac₃ (°C) | Quenching (°C) | T.S. (MPa) | EL. (%) | R.A. (%) | uE₂₀ (J/cm²) | uE₋₄₀ (J/cm²) | Toughness evaluation | Grainsize number | Corrosion weight loss (g/m²) | Anti-corrosion evaluation | Torsional fatigue (MPa) | Category |
|---|---|---|---|---|---|---|---|---|---|---|---|---|---|---|
| 50 | 50 | 839 | 900 | 1503 | 17.3 | 61.0 | 95 | 58 | Accepted | 9.0 | 432 | Accepted | 740 | Ex. 28 |
| 51 | 51 | 847 | 900 | 1401 | 19.9 | 64.7 | 111 | 68 | Accepted | 9.0 | 411 | Accepted | 720 | Ex. 29 |

In Tables 1-1, 1-2, 2-1, and 2-2, steel Nos. 23 to 51 were steel materials whose chemical compositions and prior austenite crystal grain size numbers were within the respective disclosed ranges, and had high strength and high toughness with a tensile strength of 1200 MPa or more, and excellent corrosion resistance with a corrosion weight loss of less than 1000 (g/m$^2$). With regard to the fatigue strength, steel Nos. 23 to 51 were proved to have higher strength than steel No. 22 (JIS SUP9) as a conventional material in the torsional fatigue test.

On the other hand, in Table 1-1, steel Nos. 1 to 22 were steel materials whose chemical compositions were not within the disclosed range, and in particular steel No. 22 had the chemical composition according to JIS SUP9.

Comparative Example 1 had a tensile strength of 758 MPa due to its too low C content, and so was unable to attain the desired strength and low in fatigue strength.

Comparative Example 2 had excessive carbide precipitation due to its too high C content of 0.36%, and so was low in both corrosion resistance and toughness and low in fatigue strength.

Comparative Example 3 was low in toughness due to its too high Si content of 0.64%, and so was low in fatigue strength.

Comparative Example 4 had a tensile strength of 945 MPa due to its too low Mn content, and so was unable to attain the desired strength and low in fatigue strength.

Comparative Example 5, though attaining the desired strength, was low in toughness due to its too high Mn content, and so was low in fatigue property.

Comparative Example 6 was low in toughness due to its too high P content, and so was low in fatigue strength.

Comparative Example 7 was low in toughness and corrosion resistance due to its too high S content, and so was low in fatigue strength.

Comparative Example 8 was low in corrosion resistance due to its too low Cu content, and so was low in fatigue strength as the fatigue test piece corrosion progressed.

Comparative Example 9 was low in corrosion resistance due to its too low Ni content, and so was low in fatigue strength as the fatigue test piece corrosion progressed.

Comparative Example 10 had a tensile strength of 610 MPa due to its too low Cr content, and so was unable to attain the desired strength and low in fatigue strength.

Comparative Example 11 had excessive carbide due to its too high Cr content, and so was low in both toughness and corrosion resistance and low in fatigue strength.

Comparative Example 12 lacked toughness due to its too low Mo content, and so was low in fatigue strength.

Comparative Example 13 lacked sufficient deoxidation and had excessive oxide due to its too low sol. Al content, and so was low in both toughness and corrosion resistance and low in fatigue strength as a result of corrosion progression and stress concentration caused by the oxide.

Comparative Example 14 had excessive Al$_2$O$_3$ oxide or excessive nitride such as AlN due to its too high sol. Al content, and so was low in both toughness and corrosion resistance and low in fatigue strength.

Comparative Example 15 had low quench hardenability and an excessively low tensile strength of 667 MPa due to its too low B content, and so was low in fatigue strength.

Comparative Example 16 contained neither B nor Mo, and so was low in toughness and low in fatigue strength.

Comparative Example 17 had a tensile strength of 1050 MPa and was unable to attain the desired strength due to its too low Ti content, and also had low toughness caused by the coarse structure, and so was low in fatigue strength.

Comparative Example 18 had excessive carbonitride precipitation due to its too high Ti content, and so was low in toughness and corrosion resistance and low in fatigue strength.

Comparative Example 19 was unable to attain the desired strength due to its too low Nb content, and also was low in toughness because the crystal grains were not refined.

Comparative Example 20 was unable to attain the desired strength due to its too low V content, and so was low in fatigue strength.

Comparative Example 21, while each of the Cu content and the Ni content was within the disclosed range, had insufficient corrosion resistance because the total content of Cu and Ni was too low, and so was low in fatigue strength.

Comparative Example 22 was an example of JIS SUP9 conventionally used for stabilizers, but was lower in toughness, corrosion resistance, and torsional fatigue property than the disclosed steels because the chemical composition was not within the disclosed range.

(Second Example)

Table 3 shows the results of an example indicating the effect of the crystal grain size.

Test pieces with different prior austenite grain sizes (grain size numbers) were produced by adjusting the quenching temperature after forming using steel No. 49. The other conditions were the same as those in the first example.

Table 3

| Test No. | Steel No. | Quenching (°C) | Grain size number | TS (MPa) | EL (%) | RA (%) | $uE_{20}$ (J/cm$^2$) | $uE_{-40}$ (J/cm$^2$) | Toughness | Torsional fatigue (MPa) | Category |
|---|---|---|---|---|---|---|---|---|---|---|---|
| 52 | 49 | 900 | 9.5 | 1454 | 18.5 | 62.8 | 103 | 63 | Accepted | 720 | Ex. 2-1 |
| 53 | 49 | 950 | 9.5 | 1423 | 18.4 | 64.7 | 98 | 60 | Accepted | 740 | Ex. 2-2 |
| 54 | 49 | 970 | 9.5 | 1428 | 18.0 | 65.8 | 93 | 58 | Accepted | 730 | Ex. 2-3 |
| 55 | 49 | 1000 | 9.0 | 1431 | 17.6 | 64.1 | 90 | 54 | Accepted | 730 | Ex. 2-4 |
| 56 | 49 | 1030 | 8.0 | 1456 | 17.3 | 63.8 | 87 | 51 | Accepted | 710 | Ex. 2-5 |
| 57 | 49 | 1040 | 7.5 | 1481 | 17.3 | 61.2 | 80 | 40 | Accepted | 700 | Ex. 2-6 |
| 58 | 49 | 850 | 11.0 | 1083 | 20.3 | 71.1 | 128 | 87 | Accepted | 530 | Comp. Ex. 2-1 |
| 59 | 49 | 1050 | 7.0 | 1594 | 12.3 | 30.1 | 54 | 28 | Rejected | 520 | Comp. Ex. 2-2 |
| 60 | 49 | 1070 | Mixed grains (7.5+10.0) | 1603 | 7.3 | 24.1 | 48 | 19 | Rejected | 490 | Comp. Ex. 2-3 |

As shown in the table, Examples 2-1, 2-2, 2-3, 2-4, 2-5, and 2-6 whose crystal grain sizes were within the disclosed range had excellent strength and toughness and exhibited high fatigue property.

On the other hand, Comparative Example 2-1 had low quench hardenability and low tensile strength and so was low in fatigue strength, because the prior austenite crystal grain size number was greater than the disclosed range and the crystal grains were finer.

Comparative Example 2-2 was low in toughness and so was low in fatigue strength, because the prior austenite crystal grain size number was smaller than the disclosed range and the crystal grains were coarser.

Comparative Example 2-3 was low in toughness and so was low in fatigue strength, because the crystal grains were mixed grains.

**Claims**

1. A stabilizer steel consisting of, in mass%:

   C: 0.21% to 0.35%;
   Si: 0.60% or less but not including 0%;
   Mn: 0.30% to 1.50%;
   P: 0.035% or less;
   S: 0.035% or less;
   Cu: 0.05% to 0.35%;
   Ni: 0.03% to 0.15%;
   Cr: 0.05% to 0.80%;
   Mo: 0.003% to 0.050%;
   sol. Al: 0.005% to 0.080%; and
   B: 0.0005% to 0.0100%, and
   optionally, in mass%, one or more selected from
   Ca: 0.010% or less;
   Pb: 0.5% or less;
   Ti: 0.005% to 0.050%;
   V: 0.005% to 0.050%; and
   Nb: 0.005% to 0.050%,
   with a balance being Fe and incidental impurities,
   wherein a sum of the Cu content and the Ni content is 0.15% or more, and
   a crystal grain size after water quenching is in a range of 7.5 to 10.5 in prior austenite crystal grain size number according to JIS G 0551, and
   the stabilizer steel has a tensile strength of 1200 MPa or more.

2. A method for manufacturing a stabilizer in vehicle stabilizer production, the method comprising:

   rolling the stabilizer steel according to claim 1 into a steel bar or a wire rod;
   after rolling the stabilizer steel,

   cold forming the steel bar or the wire rod into a shape of a stabilizer; and heating the formed stabilizer to a range of [an austenitizing temperature + 50 °C] or more and less than 1050 °C; or
   heating the steel bar or the wire rod to a range of [an austenitizing temperature + 50 °C] or more and less than 1050 °C, to form the steel bar or the wire rod into a shape of a stabilizer; or
   heating the steel bar or the wire rod to a range of [an austenitizing temperature + 50 °C] or more and 1250 °C or less, to form the steel bar or the wire rod into a shape of a stabilizer, air cooling the formed stabilizer to a normal temperature; reheating the cooled stabilizer to a range of of [an austenitizing temperature + 50 °C] and less than 1050 °C; and

   then directly water quenching the stabilizer.

3. The method for manufacturing a stabilizer according to claim 2, further comprising performing one or more selected from a shot peening process, a shot blasting process, a coating process, and a baking process.

**Patentansprüche**

1. Ein Stabilisatorstahl, bestehend aus, in Masse-%:

C: 0,21% bis 0,35%;
Si: 0,60% oder weniger, aber ausgenommen 0%;
Mn: 0,30% bis 1,50%;
P: 0,035% oder weniger;
S: 0,035% oder weniger;
Cu: 0,05% bis 0,35%;
Ni: 0,03% bis 0,15%;
Cr: 0,05% bis 0,80%;
Mo: 0,003% bis 0,050%;
sol. Al: 0,005% bis 0,080%; und
B: 0,0005% bis 0,0100%, und optional, in Masse-%, eines oder mehrerer, ausgewählt aus Ca: 0,010% oder weniger;
Pb: 0,5% oder weniger;
Ti: 0,005% bis 0,050%;
V: 0,005% bis 0,050%; und
Nb: 0,005 % bis 0,050 %,
wobei der Rest Fe und zufällige Verunreinigungen sind,
wobei die Summe des Cu-Gehalts und des Ni-Gehalts 0,15 % oder mehr beträgt und wobei die Kristallkorngröße nach dem Abschrecken mit Wasser in einem Bereich von 7,5 bis 10,5 der vorherigen Kristallkorngrößenzahl von Austenit gemäß JIS G 0551 liegt und wobei der Stabilisatorstahl eine Zugfestigkeit von 1.200 MPa oder mehr aufweist.

2. Verfahren zur Herstellung eines Stabilisators bei der Herstellung von Fahrzeugstabilisatoren, wobei das Verfahren Folgendes umfasst:

Walzen des Stabilisatorstahls nach Anspruch 1 zu einem Stahlstab oder Walzdraht;
nach dem Walzen des Stabilisatorstahls, Kaltverformen des Stahlstabs oder des Walzdrahtes in die Form eines Stabilisators; und
Erhitzen des geformten Stabilisators auf einen Bereich von [einer Austenitisierungstemperatur + 50 °C] oder mehr und weniger als 1.050 °C; oder
Erhitzen des Stahlstabes oder des Walzdrahtes auf einen Bereich von [einer Austenitisierungstemperatur + 50 °C] oder mehr und weniger als 1.050 °C, um den Stahlstab oder den Walzdraht in die Form eines Stabilisators zu bringen; oder
Erhitzen des Stahlstabes oder des Walzdrahtes auf einen Bereich von [einer Austenitisierungstemperatur + 50 °C] oder mehr und 1.250 °C oder weniger, um den Stahlstab oder den Walzdraht in die Form eines Stabilisators zu bringen; Abkühlen des geformten Stabilisators an der Luft auf eine normale Temperatur;
Wiedererhitzen des abgekühlten Stabilisators auf einen Bereich von [einer Austenitisierungstemperatur + 50 °C] und weniger als 1.050 °C; und
anschließend direktes Abschrecken des Stabilisators mit Wasser.

3. Verfahren zur Herstellung eines Stabilisators nach Anspruch 2, ferner umfassend das Durchführen eines oder mehrerer aus einem Kugelstrahlverfahren, einem Kiesstrahlen, einem Beschichtungsverfahren und einem Einbrennverfahren.

**Revendications**

1. Acier stabilisateur composé, en % en masse par :

C : de 0,21 % à 0,35 % ;
Si : 0,60 % ou moins mais sans inclure 0 % ;
Mn : de 0,30 % à 1,50 % ;
P : 0,035 % ou moins ;
S : 0,035 % ou moins ;

Cu : de 0,05 % à 0,35 % ;
Ni : de 0,03 % à 0,15% ;
Cr : de 0,05 % à 0,80 % ;
Mo : de 0,003 % à 0,050 % ;
sol. Al : de 0,005 % à 0,080 % ; et
B : de 0,0005 % à 0,0100 %, et
éventuellement, en % en masse, par
Ca : 0,010 % ou moins ;
Pb : 0,5 % ou moins ;
Ti : de 0,005 % à 0,050 % ;
V : de 0,005 % à 0,050 % ; et
Nb : de 0,005 % à 0,050 %,
le reste étant du Fe et des impuretés accidentelles,
la somme de la teneur en Cu et de la teneur en Ni étant de 0,15 % ou plus, et
la taille des grains cristallins après trempe à l'eau se situant dans une plage de 7,5 à 10,5 dans le numéro de taille de grains cristallins antérieur selon la norme JIS G 0551, et
l'acier stabilisateur ayant une résistance à la traction de 1200 MPa ou plus.

2. Procédé de fabrication d'un stabilisateur dans la production de stabilisateurs de véhicule, le procédé comprenant :

le laminage de l'acier stabilisateur selon la revendication 1 en une barre d'acier ou un fil machine ;
après le laminage de l'acier stabilisateur,

le formage à froid de la barre d'acier ou du fil machine en une forme de stabilisateur ; et le chauffage du stabilisateur formé à une plage de [une température d'austénitisation + 50 °C] ou plus et moins que 1050 ° C ; ou
le chauffage de la barre d'acier ou du fil machine à une plage de [une température d'austénitisation + 50 °C] ou plus et moins que 1050 °C, pour former la barre d'acier ou le fil machine en une forme de stabilisateur ; ou
le chauffage de la barre d'acier ou du fil machine à une plage de [une température d'austénitisation + 50 °C] ou plus et moins que 1250 °C, pour former la barre d'acier ou le fil machine en une forme de stabilisateur, refroidissant à l'air le stabilisateur formé jusqu'à une température normale ; le réchauffage du stabilisateur refroidi à une plage de [une température d'austénitisation + 50 °C] et inférieure à 1050 °C ; et

puis la trempe à l'eau direct du stabilisateur.

3. Procédé de fabrication d'un stabilisateur selon la revendication 2, comprenant en outre
la réalisation d'un processus de grenaillage et/ou d'un processus de décapage à la grenaille et/ou d'un processus de revêtement et/ou d'un processus de cuisson.

**EP 3 124 638 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11323495 A
- JP 2000017390 A
- WO 2011111623 A1
- JP 2012237040 A
- JP 2007131871 A
- EP 2708612 A1